# EUROPEAN PATENT APPLICATION

(11) **EP 4 202 281 A1**
(43) Date of publication of application: **28.06.2023**
(21) Application number: 22215313.2
(22) Date of filing: 21.12.2022
(51) Int. Cl.: F16M 1/08, F16M 5/00, F16M 7/00

(54) **DEVICE BED**

(30) Priority: 22.12.2021 FI 20214138
(71) Applicant: ASENNUSTUOTE OY, 91100 Ii (FI)
(72) Inventor: KAISTO, Joni, 91100 Ii (FI)
(74) Representative: Berggren Oy

(57) **Abstract**

A device mounting base has a substantially flat plate-like slab (10) comprising a first array of through holes for receiving fastening means of a first device to be mounted on the device mounting base, two substantially parallel side edges (12), and two substantially parallel end edges (14), and a leg part connected to the slab (10) for supporting the slab (10) at a distance from a base. The device mounting base is constructed of a single piece of a metal sheet bent into shape.

## Description

### Field of the invention

The invention relates to a device mounting base having a substantially flat plate-like slab comprising a first array of through holes for receiving fastening means of a first device to be mounted on the device mounting base, two substantially parallel side edges, and two substantially parallel end edges, and a leg part connected to the slab for supporting the slab at a distance from a base.

### Prior art

In the processing industry, in power plants and in production plants, a variety of pumps are used for pumping liquids flowing in the pipework of the plants. Many pumps are so heavy that they have to be supported by their respective mounting bases on the load-bearing structures of the plant, typically on the floor. There is no ready-made base for supporting pumps, but the supporting structures normally have to be made individually by welding from metal components. Constructing a base is very time-consuming, and a base made in worksite conditions is often unwieldy and impractical. Similar problems are faced upon installing electric motors in plants.

An object of the invention is to provide a prefabricated device mounting base, whereby problems involved in the prior art can be reduced. The aims of the invention are achieved with a device mounting base which is characterized by what is presented in the independent claim. Some advantageous embodiments of the invention are presented in the dependent claims.

### Brief summary of the invention

The invention relates to a device mounting base having a substantially flat plate-like slab comprising a first array of through holes for receiving fastening means of a first device to be mounted on the device mounting base, two substantially parallel side edges, and two substantially parallel end edges, and a leg part connected to the slab for supporting the slab at a distance from a base. The device mounting base is constructed of a single piece of a metal sheet bent into shape. Preferably, the device mounting base is made of a steel sheet having a thickness between 4 and 10 mm, preferably between 6 and 8 mm. The first device to be mounted on the device mounting base may be a pump or an electric motor.

In a preferred embodiment of the device mounting base according to the invention, said leg part comprises a first leg at a first side edge and a second leg at a second side edge, the width of the first and second legs being equal to the width of the slab. The width of the slab refers to the distance between the end edges.

In a second preferred embodiment of the device mounting base according to the invention, each of the first and second legs has a lower edge with a heel which extends as a bend from the plane of the leg and is provided with at least two supporting means spaced from each other. The supporting means comprise a supporting surface configured to be pressed against the base. Each of the two supporting legs is thus supported on the base by at least two supporting means, spaced from each other, to secure firm support for the device mounting base.

In yet another preferred embodiment of the device mounting base according to the invention, the supporting means comprise adjusting means for adjusting the distance between the supporting surface of the supporting means and the heel. Preferably, said adjusting means comprise a threaded rod and a fixing hole provided in the heel for receiving the threaded rod. Thanks to the adjusting means, the device mounting base can also be supported on an uneven surface so that the slab is in a precisely horizontal position. The adjusting means also make it possible to adjust the slab to a suitable height level. Preferably, said supporting means comprise a vibration damping cushion for reducing the transmission of vibrations of the device mounted on the device mounting base to the base.

Yet another preferred embodiment of the device mounting base according to the invention further comprises a second array of through holes for receiving fastening means of at least one second device, the second array of holes being spaced from the first array of holes. It is thus possible to mount two devices, for example two pumps or two electric motors, on such a device mounting base.

In yet another preferred embodiment of the device mounting base according to the invention, said holes comprise elongate grooves extending through the slab. Preferably, said grooves comprise at least two first grooves which are substantially parallel, and at least two second grooves which are substantially transverse to the first grooves. Said grooves may also comprise at least two third grooves, the third grooves being substantially arranged at an angle of 45 degrees to the first and second grooves.

In yet another preferred embodiment of the device mounting base according to the invention, the first leg and the second leg comprise at least one through hole for receiving a reinforcement element. The device mounting base may be supported on the load-bearing base even before the base is provided with a surface casting to form a final floor surface, or a concrete machine foundation may be cast under the device mounting base after the installation of the device mounting base. Thus, some of the deformed steel bars used as reinforcement elements for the surface casting or the foundation may be introduced through the holes in the legs of the device mounting base, to enhance the anchoring of the device mounting base on the surface casting or the foundation.

An advantage of the invention is that it significantly reduces the time consumed in the installation of pumps and motors, providing savings in installation costs.

Yet another advantage of the invention is that it reduces mounting faults and the need for fixing them.

### Brief description of the drawings

In the following, the invention will be described in detail. In the description, reference will be made to the appended drawings, in which
Figs. 1a to 1c show examples of a device mounting base according to the invention seen from different directions, and
Fig. 2 shows an example of a preferred embodiment of a device mounting base according to the invention in a top view.

### Detailed description of the invention

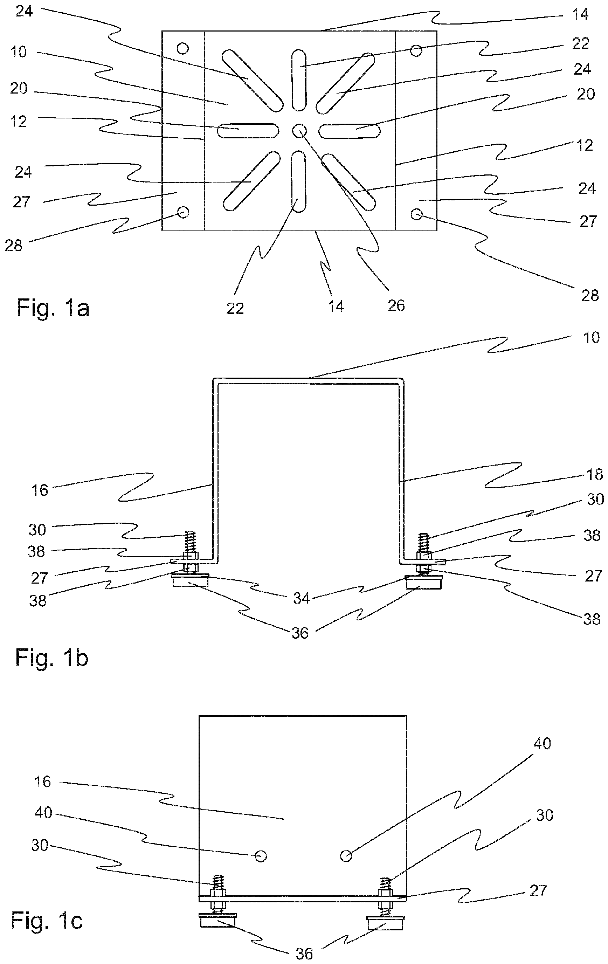

Figure 1a shows an example of a device mounting base according to the invention seen from above, and Figs. 1b and 1c show the same device mounting base seen from a first side and a second side, respectively. In the following, all said figures will be described at the same time.

The device mounting base is a one-piece element made of a shaped metal sheet and having a substantially flat plate-like slab 10 with two substantially parallel side edges 12 and two substantially parallel end edges 14. The slab is thus rectangular or square. Preferably, the device mounting base is made of a zinc coated or stainless steel plate having a thickness of 8 mm.

The slab is provided with an array of through holes for receiving fastening means for mounting a device, such as a pump or a motor, on the device mounting base. The holes comprise two first grooves 20 in a line parallel with the end edges 14 of the slab, and two second grooves 22 in a line parallel with the side edges 12 of the slab. Moreover, the slab is provided with two pairs of third grooves 24 arranged at an angle of 45 degrees to the first and second grooves. A round hole 26 is provided in the center of the array of the elongate grooves. The grooves in the slab make it possible to mount devices, such as pumps and motors, on the slab by means of bolts having a diameter smaller than the width of the groove and a head width greater than the width of the groove. The elongate shape, layout and large number of the grooves make it possible to mount devices having various layouts of fixing holes on the device mounting base provided with a groove array of a standard form.

The first side edge of the slab is provided with a plate-like first leg 16 extending from the plane of the slab as a bend with a substantially right angle. Similarly, the second side edge of the slab is provided with a second leg 18 extending from the plane of the slab as a bend with a substantially right angle. The first and second legs constitute the leg part of the device mounting base. The width of the first and second legs is equal to the width of the slab. In this context, the width of the slab refers to the distance between the end edges 14. At the lower edge of each leg, that is, at the edge farthest from the slab, a heel 27 is provided which extends from the plane of the leg as a bend with a substantially right angle so that both heels lie substantially in the same imaginary plane and point away from each other. Each heel is provided with two tapped fixing holes 28. The fixing holes are close to the ends of the heel, spaced from each other, and respective threaded rods 30 are screwed through them, whereby the lower end of each threaded rod, i.e. the end farthest from the slab, is provided with a supporting means. The supporting means comprises a circular flange 34 formed from sheet metal, and a cushion 36 made of a resilient material, such as neoprene, and attached to the first surface of the flange. The surface of the cushion that is farthest from the flange constitutes a supporting surface which, in the installed device mounting base, is placed against the base. Thanks to the resilience of the cushions, vibrations of the device mounted on the device mounting base, such as a pump or a motor, are not transmitted to the base, at least not to the full extent.

A first end of the threaded rod is fastened to second surface of the flange 34, namely on the side of the heel 27. The threaded rod and the tapped fixing hole 28 constitute adjustment means by which the supporting surface of the supporting means can be adjusted to a desired distance from the heel by rotating the threaded rod. Using the adjustment means, it is also possible to support the device mounting base on an uneven base in such a way that its slab assumes a substantially horizontal position. Two nuts 38 are screwed on the threaded rod, arranged on opposite sides of the heel. After the supporting means has been adjusted to a suitable position with respect to the heel, it is immobilized by tightening the nuts against the heel. The fixing hole may be untapped as well, in which case the supporting means is moved with respect to the heel by screwing and unscrewing the nuts.

The device mounting base according to the invention may be placed to rest freely, supported by the supporting means, on a load-bearing base, such as a floor. Alternatively, the lower part of the device mounting base may be partly embedded in a cast concrete structure, such as a floor slab or a machine base of concrete. Each of the two legs 16, 18 is provided with two grip holes 40 spaced from the heel and from the slab. The grip holes are used as through holes for reinforcement elements to be embedded in concrete aggregate, i.e. for deformed steel bars, by which the device mounting base is rigidly anchored in the cast concrete.

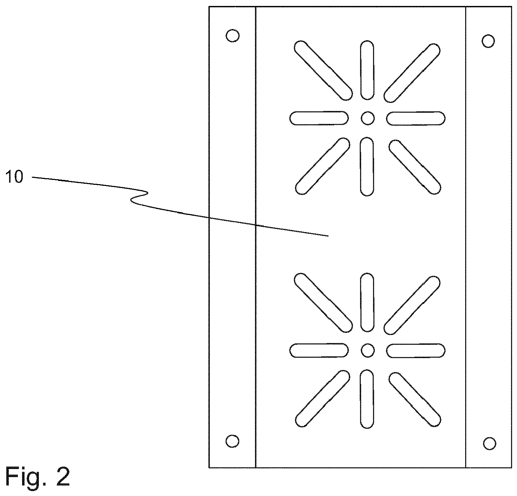

Figure 2 shows an example of an advantageous embodiment of a device mounting base according to the invention seen from above. In this embodiment, the slab 10 of the device mounting base is clearly shaped as an elongate rectangle. The first end and the second end of the slab are provided with a first array of holes and a second array of holes, respectively. Both arrays of holes correspond to that shown in Fig. 1a, and they are intended for fastening devices on the device mounting base. The elongate shape of the slab and the two arrays of holes make it possible to mount two different devices, such as a pump or a motor, on the same device mounting base simultaneously. The slab may also comprise more than two arrays of holes, for mounting more devices.

According to the invention, versions of the device mounting base may be made in different sizes for different devices and mounting situations. The different versions of the device mounting base may vary in the dimensions of the sides of the slab and in the height and width of the legs. The dimensions of the sides of the slab of the device mounting base may range, for example, between 20 and 100 cm, and the height of the leg between 20 and 40 cm.

Some advantageous embodiments of the device mounting base according to the invention have been described above. The invention is not limited to the solutions described above, but the inventive idea may be applied in different ways within the scope of the claims.

### List of reference numerals:

- 10: slab
- 12: side edge
- 14: end edge
- 16: first leg
- 18: second leg
- 20: first groove
- 22: second groove
- 24: third groove
- 26: hole
- 27: heel
- 28: fixing hole
- 30: threaded rod
- 34: flange
- 36: cushion
- 38: nut
- 40: grip hole

## Claims

1. A device mounting base having a substantially flat plate-like slab (10), said slab (10) comprising a first array of through holes for receiving fastening means of a first device to be mounted on the device mounting base, two substantially parallel side edges (12), and two substantially parallel end edges (14), and a leg part connected to the slab (10) for supporting the slab (10) at a distance from a base, **characterized in that** said device mounting base is a one-piece element built from a single shaped metal sheet.

2. The device mounting base according to claim 1, **characterized in that** said leg part comprises a first leg (16) at a first side edge (12) and a second leg (18) at a second side edge (12), the width of the first and second legs (16, 18) being equal to the width of the slab (10).

3. The device mounting base according to claim 2, **characterized in that** each of the first and second legs (16, 18) have a lower edge with a heel (27) extending at an angle from the plane of the leg and having at least two supporting means spaced from each other, the supporting means having a supporting surface arranged to be pressed against the base.

4. The device mounting base according to claim 3, **characterized in that** the supporting means comprise adjusting means for adjusting the distance between the supporting surface of the supporting means and the heel (27).

5. The device mounting base according to claim 4, **characterized in that** said adjusting means comprise a threaded rod (30) and a fixing hole (28) provided in the heel (27) for receiving the threaded rod (30).

6. The device mounting base according to claim 4, **characterized in that** said supporting means comprise a cushion (36) for damping vibrations.

7. The device mounting base according to any of the claims 1 to 6, **characterized in that** it further comprises a second array of through holes for receiving fastening means of at least one second device, the second array of holes being spaced from the first array of holes.

8. The device mounting base according to any of the claims 1 to 7, **characterized in that** said holes comprise elongate grooves extending through the slab.

9. The device mounting base according to claim 8, **characterized in that** said grooves comprise at least two first grooves (20) which are substantially parallel, and at least two second grooves (22) which are substantially transverse to the first grooves.

10. The device mounting base according to claim 9, **characterized in that** said grooves also comprise at least two third grooves (24), the third grooves (24) being substantially arranged at an angle of 45 degrees to the first and second grooves (20, 22).

11. The device mounting base according to any of the claims 1 to 10, **characterized in that** each of the first leg (16) and the second leg (18) comprise at least one grip hole (40) for receiving a reinforcement element.

12. The device mounting base according to any of the claims 1 to 11, **characterized in that** it is made of a steel sheet having a thickness between 4 and 10 mm, preferably between 6 and 8 mm.
